# EUROPÄISCHE PATENTSCHRIFT

(11) **EP 2 734 922 B1**
(45) Veröffentlichungstag und Bekanntmachung des Hinweises auf die Patenterteilung: **20.05.2015**
(21) Anmeldenummer: 12743910.7
(22) Anmeldetag: 04.07.2012
(51) Int. Cl.: G06F 9/445

(54) **STEUERVORRICHTUNG FÜR EIN KRAFTFAHRZEUG, PROGRAMMIERVORRICHTUNG UND PROGRAMMIERSYSTEM**
CONTROL UNIT FOR A VEHICLE, PROGRAMMING DEVICE AND PROGRAMMING SYSTEM
UNITÉ DE CONTRÔLE POUR UN VÉHICULE, DISPOSITIF DE PROGRAMMATION ET SYSTÈME DE PROGRAMMATION

(30) Priorität: 19.07.2011 DE 102011079402
(43) Veröffentlichungstag der Anmeldung: 28.05.2014
(73) Patentinhaber: Bayerische Motoren Werke Aktiengesellschaft, 80809 München (DE)
(72) Erfinder: PIETSCHMANN, Ingolf, 85276 Pfaffenhofen (DE)
(86) Internationale Anmeldenummer: PCT/EP2012/062977
(87) Internationale Veröffentlichungsnummer: WO 2013/010789

(56) Entgegenhaltungen:
- EP-A1- 2 241 479
- WO-A1-2010/124775
- WO-A2-2010/143910
- US-A- 5 523 948
- US-B1- 7 594 017

## Beschreibung

Die Erfindung betrifft eine Steuervorrichtung für ein Kraftfahrzeug, eine Programmiervorrichtung und ein Programmiersystem.

Moderne Kraftfahrzeuge weisen eine Vielzahl von programmgesteuerten Steuergeräten auf. Die Steuergeräte umfassen meistens einen Programmspeicher, der in einem eingebauten Zustand des Steuergeräts programmiert werden kann. Bei heutigen Steuergeräten ist der Programmspeicher häufig als Flash-Speicher ausgebildet. Flash-Speicher sind nichtflüchtige Speicherbausteine, bei denen unbeschriebene oder gelöschte Zellen jederzeit beschrieben werden können, bei denen das Löschen von Zellen aber nur segmentweise möglich ist. Die Steuergeräte weisen häufig eine Diagnoseschnittstelle auf, über die das Steuergerät mit einer fahrzeugunabhängigen Diagnose- und/oder Testvorrichtung koppelbar ist. Bei einer Neuprogrammierung der Steuergeräte wird mittels der Diagnose- und/oder Testvorrichtung jeweils eine neue Version der Steuergerätesoftware, zum Beispiel ein Firmware-Programm, in das Steuergerät geladen.

Mit steigender Funktionalität der Steuergeräte und einer wachsenden Anzahl von unterschiedlichen Steuergeräten nimmt auch die Datenmenge an Programmcode zu, die an die Steuergeräte in der Fertigung und/oder bei einer Wartung übertragen werden muss.

Die Aufgabe, die der Erfindung zugrunde liegt, ist, eine Steuervorrichtung für ein Kraftfahrzeug, eine Programmiervorrichtung und ein Programmiersystem zu schaffen, die eine flexible und/oder zuverlässige Programmierung der Steuervorrichtung ermöglichen.

Die Aufgabe wird gelöst durch die Merkmale der unabhängigen Ansprüche. Vorteilhafte Ausgestaltungen der Erfindung sind in den Unteransprüchen angegeben.

Gemäß einem ersten Aspekt zeichnet sich die Erfindung aus durch eine Steuervorrichtung für ein Kraftfahrzeug mit einer Recheneinheit, wobei die Recheneinheit ausgebildet ist, ein oder mehrere Steuerprogramme auszuführen. Ferner umfasst die Steuervorrichtung zumindest eine Kommunikationsschnittstelle zum Senden und Empfangen von Daten und einen Programmspeicher zum Speichern von Programmdaten der jeweiligen Steuerprogramme. Die Steuervorrichtung ist ausgebildet, für eine Programmierung der Steuervorrichtung mit Programmdaten, die in dem Programmspeicher vorgegeben abgespeichert werden, eine vorgegebene Menge an Protokollen zu unterstützen. Die Steuervorrichtung ist ausgebildet, eine Programmdatenaktualisierungsaufforderung für zumindest ein zu aktualisierendes Steuerprogramm, die an der Kommunikationsschnittstelle bereitgestellt wird, einzulesen und auszuwerten, wobei die Programmdatenaktualisierungsaufforderung zumindest einen ersten Indikator umfasst, der mögliche Protokolle repräsentiert, die für das Programmieren mit aktualisierten Programmdaten des jeweiligen Steuerprogramms genutzt werden können. Die Steuervorrichtung ist ferner ausgebildet, jeweils abhängig von dem ersten Indikator einen zweiten Indikator zu ermitteln, der das Protokoll aus der Menge an Protokollen repräsentiert, welches für das Programmieren der Steuervorrichtung mit den Programmdaten des zu aktualisierenden Steuerprogramms genutzt werden soll. Die Steuervorrichtung ist ausgebildet, in Antwort auf die Programmdatenaktualisierungsaufforderung eine Programmdatenanforderung, die den zweiten Indikator umfasst, über die Kommunikationsschnittstelle zu versenden.

Programmierung ist hierbei im Sinne eines Einbringens eines oder mehrerer Steuerprogramme in die Steuervorrichtung zu verstehen, derart, dass die Steuervorrichtung das jeweilige Steuerprogramm ausführen kann. Ein mögliches Protokoll, das für die Programmierung der Steuervorrichtung genutzt werden kann, ist das Unified Diagnostic Services Protokoll (UDS-Protokoll). Das UDS-Protokoll ist ein Kommunikationsprotokoll, das für Kraftfahrzeuge entwickelt wurde und das eine Kommunikation zwischen der jeweiligen Steuervorrichtung und einer fahrzeugexternen Einheit ermöglicht. Das jeweilige Kraftfahrzeug kann hierzu eine Diagnoseschnittstelle aufweisen, die es ermöglicht, die Einheit mit einem Fahrzeugdatenbus zu koppeln. Damit ist es zum Beispiel möglich, einen Fehlerspeicher der jeweiligen Steuervorrichtung abzufragen und/oder ein oder mehrere Steuerprogramme, insbesondere eine aktuelle Firmware in den Programmspeicher zu laden. Das UDS-Protokoll kann für einfachere Steuervorrichtungen genutzt werden, die beispielsweise einen Mikrocontroller aufweisen und/oder als eingebettetes System (englisch embedded system) ausgebildet sind. Mit zunehmender Funktionalität und Komplexität der Steuervorrichtungen, die beispielsweise einen oder mehrere Prozessoren und/oder eine andere Programmspeicherstruktur aufweisen, kann es erforderlich sein, andere Protokolle zur Programmierung der Steuervorrichtung zu nutzen, um eine zuverlässige Programmierung zu ermöglichen. Eine Vorgabe des Protokolls durch die Steuervorrichtung ermöglicht, dass abhängig von einer vorgegebenen Hard- und Softwareplättform der Steuervorrichtung das Protokoll geeignet ausgewählt werden kann, sodass eine zuverlässige, flexible und/oder schnelle Programmierung der Steuervorrichtung möglich ist. Hierbei kann die Steuervorrichtung ausgebildet sein, die Programmdaten von einer geeignet ausgebildeten Programmiervorrichtung, die über die Kommunikationsschnittstelle mit der Steuervorrichtung gekoppelt ist, direkt zu empfangen und/oder von einer externen Datenquelle herunterzuladen oder anzufordern unter Verwendung einer Adresse für einen Verbindungsaufbau zwischen der Steuervorrichtung und der externen Datenquelle.

Gemäß einem zweiten Aspekt zeichnet sich die Erfindung aus durch eine Programmiervorrichtung für zumindest eine Steuervorrichtung eines Kraftfahrzeugs. Die Programmiervorrichtung weist eine weitere Kommunikationsschnittstelle auf, über die die Programmiervorrichtung koppelbar ist mit der jeweiligen Steuervorrichtung. Ferner ist die Programmiervorrichtung ausgebildet, eine Programmversion zumindest eines Steuerprogramms der jeweiligen Steuervorrichtung, mit der sie gekoppelt ist, abzufragen, und wenn sie erkennt, dass das zumindest eine Steuerprogramm nicht in einer vorgegebenen Programmversion in der Steuervorrichtung abgespeichert ist, eine Programmdatenaktualisierungsaufforderung für zumindest das eine zu aktualisierende Steuerprogramm über die weitere Kommunikationsschnittstelle an die jeweilige Steuervorrichtung zu senden. Hierbei umfasst die Programmdatenaktualisierungsaufforderung zumindest einen ersten Indikator, der mögliche Protokolle repräsentiert, die für das Programmieren mit aktualisierten Programmdaten des jeweiligen Steuerprogramms genutzt werden können. Die Programmiervorrichtung ist ferner ausgebildet, eine in Antwort auf die Programmdatenaktualisierungsaufforderung an der weiteren Kommunikationsschnittstelle bereitgestellte Programmdatenanforderung auszuwerten, wobei die Programmdatenanforderung einen zweiten Indikator umfasst, der ein von der jeweiligen Steuervorrichtung ausgewähltes Protokoll repräsentiert. Die Programmiervorrichtung ist ferner ausgebildet, abhängig von dem Auswerteergebnis die Programmierung mit den aktuellen Programmdaten gemäß dem jeweils ausgewählten Protokoll mittelbar und/oder direkt bereitzustellen.

Bei einer direkten Bereitstellung werden die Programmdaten von der Programmiervorrichtung bereitgestellt und an die Steuervorrichtung gesendet. Bei einer mittelbaren Bereitstellung teilt die Programmiervorrichtung der Steuervorrichtung eine Adresse einer Datenquelle mit, von der die Steuervorrichtung die Programmdaten anfordern und/oder herunterladen kann.

Gemäß einem dritten Aspekt zeichnet sich die Erfindung aus durch ein Programmiersystem, das zumindest eine Steuervorrichtung gemäß dem ersten Aspekt und eine Programmiervorrichtung gemäß dem zweiten Aspekt umfasst, wobei die Programmiervorrichtung mit der jeweiligen Steuervorrichtung gekoppelt ist.

Ausführungsbeispiele der Erfindung sind im Folgenden anhand von schematischen Zeichnungen näher erläutert. Es zeigt:

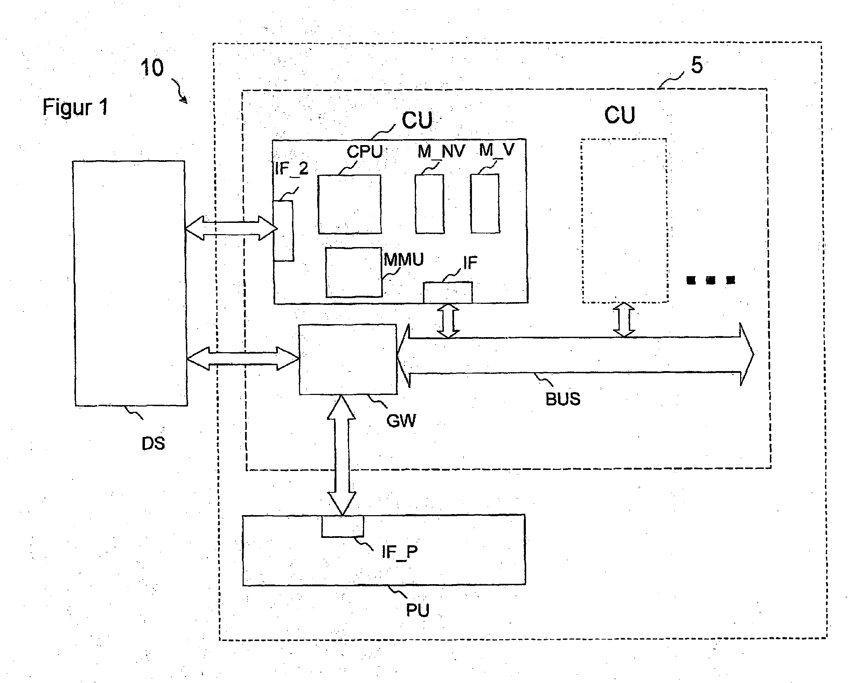

- Figur 1: ein erstes Ausführungsbeispiel eines Programmiersystems.

Das in Figur 1 gezeigte Programmiersystem 10 umfasst ein fahrzeugseitiges System 5 und eine fahrzeugexterne Programmiervörrichtung PU. Das fahrzeugseitige System 5 umfasst eine oder mehrere Steuervorrichtungen CU und beispielsweise einen oder mehre Fahrzeugdatenbusse sowie ein Gateway GW. Das Gateway GW koppelt beispielsweise mehrere Fahrzeugdatenbusse BUS und/oder das Gateway GW ermöglicht eine Kommunikation zu fahrzeugexternen Kommunikationseinheiten, beispielsweise über eine Mobilfunkverbindung. Alternativ ist möglich, dass das fahrzeugseitige System 5 mehrere Gateways GW umfasst.

Die jeweilige Steuervorrichtung CU umfasst eine Kommunikationsschnittstelle IF. Über die Kommunikationsschnittstelle IF können Daten von der Steuervorrichtung CU gesendet werden wie auch empfangen werden. Die Kommunikationsschnittstelle IF koppelt die Steuervorrichtung CU beispielsweise mit dem Fahrzeugdatenbus BUS des Kraftfahrzeugs. Der Fahrzeugdatenbus ist beispielsweise als Controller-Area-Network-Bus (CAN-Bus) ausgebildet. Grundsätzlich sind aber auch andere dem Fachmann bekannte Fahrzeugdatenbusse möglich.

Die Progrämmiervorrichtng PU kann beispielsweise in einer Test- und Diagnosevorrichtung angeordnet sein. Die Programmiervorrichtung kann beispielsweise in einer Fahrzeugfertigung und/oder einer Fahrzeugreparaturwerkstatt genutzt werden für die Programmierung zumindest eines Teils der Steuervorrichtung CU der jeweiligen Kraftfahrzeuge. Die Programmiervorrichtung PU weist beispielsweise eine weitere Kommunikationsschnittstelle IF_P auf, über die die Programmiervorrichtung PU koppelbar ist mit der jeweiligen Steuervorrichtung CU und/oder dem Fahrzeugdatenbus BUS. Über die weitere Kommunikationsschnittstelle IF_P können Daten von der Programmiervorrichtung PU gesendet und empfangen werden. Beispielsweise kann die Programmiervorrichtung PU unter Vermittlung des Gateways GW mit der jeweiligen Steuervorrichtung CU kommunizieren.

Die Steuervorrichtung CU umfasst eine Recheneinheit CPU. Die Recheneinheit CPU kann beispielsweise einen Mikrocontroller und/oder einen Mikroprozessor aufweisen. Die Recheneinheit CPU ist ausgebildet, Programme und Berechnungen auszuführen zur Steuerung und/oder Regelung weiterer Fahrzeugsysteme, zum Beispiel für eine Motorsteuerung, eine Abgasregelung und/oder eine Fahrdynamikregelung (ESP, Elektronisches Stabilitätsprogramm).

Ferner umfasst die Steuervorrichtung CU einen Programmspeicher M_NV. Die Recheneinheit CPU ist mit dem Programmspeicher M_NV gekoppelt. In dem Programmspeicher M_NV sind Programmdaten der jeweiligen Steuerprogramme, die von der Recheneinheit CPU ausgeführt werden, gespeichert. Der Programmspeicher M_NV ist beispielsweise als nichtflüchtiger Speicher ausgebildet, beispielsweise als Flash-Speicher. Der Programmspeicher M_NV ist beispielsweise neuprogrammierbar ausgebildet im Sinne, dass ein in dem Programmspeicher M_NV zuvor abgespeichertes Steuerprogramm zunächst zumindest teilweise gelöscht werden kann und ein dabei frei gewordener Speicherbereich mit Programmdaten eines aktuelleren Steuerprogramms oder eines anderen Steuerprogramins neu beschrieben werden kann. Die Neuprogrammierung, zum Beispiel des Flash-Speichers, ermöglicht eine Fehlerbehebung sowie eine Nachrüstung neuer Funktionen für die Steuervorrichtung CU. Der Programmspeicher M_NV kann auch einen Fehlerspeicher umfassen. In dem Fehlerspeicher können beispielsweise von der Steuervorrichtung CU erfasste Störungen des Kraftfahrzeugs und/oder erfasste technische Defekte gespeichert werden.

Die Steuervorrichtung CU kann beispielsweise eine flüchtige Speichereinheit M_V aufweisen, die beispielsweise als Random Access Memory (RAM-Speicher) ausgebildet ist.

Der Programmspeicher M_NV und/oder die flüchtige Speichereinheit M_V können in dem Mikrocontroller beziehungsweise dem Mikroprozessor angeordnet sein. Grundsätzlich können der Programmspeicher M_NV und/oder die flüchtige Speichereinheit M_V auch als externe Komponenten außerhalb des Mirocontrollers beziehungsweise des Mikroprozessors in der Steuervorrichtung CU angeordnet sein.

Die Steuervorrichtung CU ist beispielsweise ausgebildet, eine an der Kommunikationsschnittstelle IF bereitgestellte Programmdatenaktualisierungsaufforderung für zumindest ein zu aktualisierendes Steuerprogramm auszuwerten. Hierbei umfasst die Programmdatenaktualisierungsaufforderung zumindest eine Adresse einer von der Steuervorrichtung CU unabhängigen externen Datenquelle DS, von der jeweils aktuelle Programmdaten des zu aktualisierenden Steuerprogramms angefordert werden können. Des Weiteren ist die Steuervorrichtung CU ausgebil- det, eine Programmdatenanforderung für die jeweiligen aktuellen Programmdaten an die externe Datenquelle DS über der Kommunikationsschnittstelle IF und/oder über eine zweite Kommunikationsschnittstelle IF_2 auszugeben. Die Steuervorrichtung CU ist ferner ausgebildet, die Programmdaten der jeweiligen Steuerprogramme, die in Antwort auf die Programmdatenanforderung an der Kommunikationsschnittstelle IF und/oder der zweiten Kommunikationsschnittstelle IF_2 anliegen, einzulesen und in dem Programmspeicher M_NV abzuspeichern.

Die für eine Programmierung der jeweiligen Steuervorrichtungen CU benötigten Steuerprogramme können somit von verschiedenen Quellen bereitgestellt werden. Die Programmdaten können beispielsweise von der Programmiervorrichtung PU bereitgestellt werden und die Steuervorrichtung CU kann ausgebildet sein, die Programmdaten von der Programmiervorrichtung PU anzufordern. Die Adresse kann beispielsweise einen Quellenanzeiger (Uniform Resource Locator, URL) aufweisen. Beispielsweise kann die zweite Kommunikationsschnittstelle IF_2 eine Luftschnittstelle umfassen, so dass die Steuervorrichtung CU direkt die Programmdaten von der Datenquelle DS herunterladen kann. Alternativ oder zusätzlich kann die Steuervorrichtung CU ausgebildet sein, über die Kommunikationsschnittstelle und das Gateway GW die Programmdaten herunterzuladen. Die Adresse kann alternativ oder zusätzlich einen Bezeichner, zum Beispiel eine Identifikationsnummer oder eine Nummer umfassen. In diesem Fall kann die Steuervorrichtung CU über die Kommunikationsschnittstelle IF, die zweite Kommunikationsschnittstelle IF_2 und/oder über das Gateway GW die Programmdaten von der Datenquelle DS anfordern, die dann die Programmdaten an die Steuervorrichtung CU übermittelt. Die Datenquelle DS kann beispielsweise als Server ausgebildet sein. Für die Übermittlung der Programmdaten kann beispielsweise ein Servertemplate genutzt werden. Für die Übertragung der Programmdaten kann beispielsweise ein Anwendungsprotokoll, das auf dem Internet Protokoll (IP) basiert, genutzt werden. Beispiele für solch ein Anwendungsprotokoll sind das Hypertext Transfer Protocol (http), das Hypertext Transfer Protocol Secure (https), das File Transfer Protocol (ftp) und rsync.

Die Programmiervorrichtung PU ist beispielsweise derart korrespondierend zu der Steuervorrichtung CU ausgebildet, sodass die Programmiervorrichtung PU eine Programmversion zumindest eines Steuerprogramms der jeweiligen Steuervorrichtung CU, mit der sie gekoppelt ist, abfragen kann, und wenn sie erkennt, dass das zumindest eine Steuerprogramm nicht in einer vorgegebenen Programmversion in der Steuervorrichtung CU abgespeichert ist, die Programmdatenaktualisierungsaufforderung über die weitere Kommunikationsschnittstelle IF_P an die jeweiligen Steuervorrichtung CU zu sendern. Hierbei umfasst die Programmdatenaktualisierungsaufforderung die zumindest eine Adresse der von der Steuervorrichtung CU unabhängigen externen Datenquelle DS, von der jeweils die aktuellen Programmdaten des zu aktualisierenden Steuerprogramms angefordert werden können.

Die Steuervorrichtung CU kann ferner eine Speicherverwaltungseinheit MMU aufweisen. Die Speicherverwaltungseinheit MMU ist beispielsweise ausgebildet, einen Speicherbereich zu ermitteln für die Programmdaten der jeweiligen Steuerprogramme, die über die Kommunikationsschnittstelle IF und/oder die zweite Kommunikationsschnittstelle IF_2 eingelesen werden. Ferner ist die Speicherverwaltungseinheit MMU beispielsweise ausgebildet, die Programmdaten in dem ermittelten Speicherbereich abzuspeichern und die Programmdaten der Recheneinheit CPU zur Ausführung bereitzustellen.

Dies ermöglicht eine flexible Verwaltung des Programmspeichers M_NV der jeweiligen Steuervorrichtung CU beispielsweise unabhängig von einem vorgegebenen Speicherprogramm der externen Datenquelle DS. Die Steuervorrichtung CU kann beispielsweise unabhängig von einem Flash-Loader-Programm den Programmspeicher M_NV verwalten. Im Falle, dass die externe Datenquelle DS die Speicherverwaltung vorgibt, kann solch ein Flash-Loader-Programm beispielsweise von der externen Datenquelle DS an die Steuervorrichtung CU gesendet werden. Das Flash-Loader-Programm weist eine Speicherbefehlsfolge auf, sodass bei einer Ausführung des Flash-Loader-Programms die abzuspeichernden Programmdaten vorgegeben in dem Programmspeicher M_NV gespeichert werden. Die Speicherung der Programmdaten wird in diesem Fall von der externen Datenquelle DS vorgegeben, die auch die Programmiervorrichtung PU sein kann.

Die Steuervorrichtung CU kann ausgebildet sein, vorgegeben komprimierte Programmdaten, die über die Kommunikationsschnittstelle IF und/oder die zweite Kommunikationsschnittstelle IF_2 eingelesen werden, als solche zu erkennen und die komprimierten Programmdaten zu dekomprimieren. Für die Kompression der Daten kann beispielsweise eine Huffman-Codierung genutzt werden. Alternativ können weitere dem Fachmann bekannte Kompressionsverfahren genutzt werden.

Die Steuervorrichtung CU kann ferner ausgebildet sein, eine Containerdatei, die eine oder mehrere Dateien mit Programmdaten umfasst und die über die Kommunikationsschnittstelle IF und/oder die zweite Kommunikationsschnittstelle IF_2 eingelesen wird, als solche zu erkennen, und die Dateien aus der Containerdatei zu extrahieren. Die Containerdatei kann beispielsweise als komprimierte Archivdatei ausgebildet sein. Die Containerdatei kann beispielsweise ein ZIP-Dateiformat oder GZIP- oder ein TAR-Dateienformat aufweisen.

Die komprimierten Programmdaten und/oder die Containerdatei können beispielsweise von der Programmiervorrichtung PU und/oder von der externen Datenquelle DS bereitgestellt werden.

Die Steuervorrichtung CU ist ausgebildet, für eine Programmierung der Steuervorrichtung CU mit Programmdaten eine vorgegebene Menge an Protokollen zu unterstützen. Des Weiteren ist die Steuervorrichtung CU ausgebildet, eine weitere Programmdatenaktualisierungsaufforderung für zumindest ein zu aktualisierendes Steuerprogramm, die an der Kommunikationsschnittstelle IF bereitgestellt wird, einzulesen und auszuwerten, wobei die weitere Programmdatenaktualisierungsaufforderung zumindest einen ersten Indikator umfasst, der mögliche Protokolle repräsentiert, die für das Programmieren mit aktualisierten Programmdaten des jeweiligen Steuerprogramms genutzt werden können. Die Steuervorrichtung CO ist ferner ausgebildet, jeweils abhängig von dem ersten Indikator einen zweiten Indikator zu ermitteln, der das Protokoll aus der Menge an Protokollen repräsentiert, welches für das Programmieren der Steuervorrichtung CU mit den Programmdaten des zu aktualisierenden Steuerprogramms genutzt werden soll. Die Steuervorrichtung CU ist ausgebildet, in Antwort auf die weitere Programmdatenaktualisierungsaufforderung eine weitere Programmdatenanforderung, die den zweiten Indikator umfasst, über die Kommunikationsschnittstelle IF zu versenden.

Die Programmiervorrichtung PU ist in diesem Zusammenhang ausgebildet, wenn sie erkennt, dass das zumindest eine Steuerprogramm nicht in der vorgegebenen Prögrammversion in der Steuervorrichtung CU abgespeichert ist, die weitere Programmdatenaktualisierungsaufforderung für zumindest das eine zu aktualisierende Steuerprogramm über die weitere Kommunikationsschnittstelle IF_P an die jeweilige Steuervorrichtung CU zu senden. Hierbei umfasst die weitere Programmdatenaktualisierungsaufforderung zumindest den ersten Indikator, der mögliche Protokolle repräsentiert, die für das Programmieren mit den aktualisierten Programmdaten des jeweiligen Steuerprogramms genutzt werden können. Die Programmiervorrichtung PU ist ferner ausgebildet, die in Antwort auf die weitere Programmdatenaktualisierungsaufforderung an der weiteren Kommunikationsschnittstelle IF_P bereitgestellte weitere Programmdatenanforderung auszuwerten, wobei die weitere Programmdatenanforderung den zweiten Indikator umfasst, der das von der jeweilige Steuervorrichtung CU ausgewählte Protokoll repräsentiert. Die Programmiervorrichtung ist ferner ausgebildet, abhängig von dem Auswerteergebnis die Programmierung mit den aktuellen Programmdaten gemäß dem jeweils ausgewählten Protokoll mittelbar und/oder direkt bereitzustellen.

Mögliche Protokolle sind beispielsweise das UDS-Protokoll und das Hyper Text Transfer Protocol (http).

Hierzu kann zunächst vorgesehen sein, dass die Steuervorrichtung CU und die Programmiervorrichtung PU während einer Vorbereitungsphase zunächst über ein erstes Protokoll, zum Beispiel das Unified Diagnostic Services Protokoll (UDS-Protokoll), kommunizieren. Beispielsweise kann vorgesehen sein, dass das UDS-Protokoll erweitert wird mit einem Dienst zur Abfrage eines gewünschten Protokolls für den Datenaustausch zwischen der Steuervorrichtung CU und der Programmiervorrichtung PU, insbesondere für die Programmierung der Steuervorrichtung CU. Beispielsweise kann vorgesehen sein, dass solch eine Abfrage für jedes Steuerprogramm, das aktualisiert werden soll, einzeln erfolgt. Alternativ ist möglich, dass solch eine Abfrage erfolgt für mehrere Steuerprogramme, die zu aktualisieren sind. Der erste und zweite Indikator kann jeweils einen vorgegebenen Code aufweisen, der es ermöglicht, das mögliche beziehungsweise das gewünschte Protokoll zu ermitteln.

Die Programmiervorrichtung PU unterstützt vorzugsweise die für die Programmierung der Steuervorrichtung CU möglichen Protokolle, wobei Unterstützen in dem Sinne zu verstehen ist, dass die Steuervorrichtung CU ausgebildet ist, die Programmierung mit den aktuellen Programmdaten gemäß dem jeweils ausgewählten Protokoll mittelbar und/oder direkt bereitzustellen

Die Programmiervorrichtung PU ist beispielsweise derart ausgebildet, dass wenn sie selbst die Programmierung der Steuervorrichtung CU gemäß dem gewünschten Protokoll ausführen kann, sie die Programmierung der jeweiligen Steuervorrichtung CU mit den aktuellen Programmdaten gemäß dem jeweils ausgewählten Protokoll direkt bereitstellt, beispielsweise durch ein direktes Senden der Programmdaten an die Steuervorrichtung CU. Die Programmiervorrichtung PU kann ausgebildet sein, wenn sie nicht selbst die Programmierung mit dem gewünschten Protokoll ausführen kann, in Antwort auf die weitere Programmdatenanforderung der Steuervorrichtung CU, die Programmdatenaktualisierungsaufforderung an die Steuervorrichtung CU zu senden, die zumindest die eine Adresse der externen Datenquelle DS umfasst, von der jeweils die aktuellen Programmdaten gemäß dem gewünschten Protokoll von der Steuervorrichtung CU angefordert werden kann. Die Programmiervorrichtung PU stellt in diesem Fall die Programmierung mit den aktuellen Programmdaten gemäß dem jeweils ausgewählten Protokoll mittelbar bereit. Alternativ oder zusätzlich kann die Programmiervorrichtung PU ausgebildet sein, unabhängig davon, ob sie die Programmierung mit dem gewünschten Protokoll ausführen kann oder nicht, in Antwort auf die weitere Programmdatenanforderung der Steuervorrichtung CU die Programmdatenaktualisierungsaufforderung an die Steuervorrichtung CU zu senden.

Optional kann vorgesehen sein, dass die Programmiervorrichtung PU bei Bedarf die Wahl des Protokolls der Steuervorrichtung CU ignorieren kann und ein anderes Protokoll nutzen kann, das die Steuervorrichtung CU ebenfalls unterstützt.

### Bezugszeichenliste:

- 5: fahrzeugseitiges System
- 10: Programmiersystem
- BUS: Fahrzeugdatenbus
- CPU: Recheneinheit
- CU: Steuervorrichtung
- DS: externe Datenquelle
- GW: Gateway
- IF: Kommunikationsschnittstelle
- IF_2: zweite Kommunikationsschnittstelle
- IF_P: weitere Kommunikationsschnittstelle der Programmiervorrichtung
- M_NV: Programmspeicher
- M_V: flüchtige Speichereinheit
- MMU: Speicherverwaltungseinheit
- PU: Programmiervorrichtung

## Patentansprüche

1. Steuervorrichtung (CU) für ein Kraftfahrzeug, die aufweist:
- zumindest eine Recheneinheit (CPU), die ausgebildet ist, ein oder mehrere Steuerprogramme auszuführen,
- zumindest eine Kommunikationsschnittstelle (IF) zum Senden und Empfangen von Daten,
- zumindest einen Programmspeicher (M_NV) zum Speichern von Programmdaten der jeweiligen Steuerprogramme, wobei die Steuervorrichtung (CU) ausgebildet ist:
- für eine Programmierung der Steuervorrichtung (CU) mit Programmdaten, die in einem Programmspeicher (M_NV) vorgegeben abgespeichert werden, eine vorgegebene Menge an Protokollen zu unterstützen,
- eine Programmdatenaktualisierungsaufforderung für zumindest ein zu aktualisierendes Steuerprogramm, die an der Kommunikationsschnittstelle (IF) bereitgestellt wird, einzulesen und auszuwerten, wobei die Programmdatenaktualisierungsaufforderung zumindest einen ersten Indikator umfasst, der mögliche Protokolle repräsentiert, die für das Programmieren mit aktualisierten Programmdaten des jeweiligen Steuerprogramms genutzt werden können,
- jeweils abhängig von dem ersten Indikator einen zweiten Indikator zu ermitteln, der das Protokoll aus der Menge an Protokollen repräsentiert, welches für das Programmieren der Steuervorrichtung (CU) mit den Programmdaten des zu aktualisierenden Steuerprogramms genutzt werden soll, und
- in Antwort auf die Programmdatenaktualisierungsaufforderung eine Programmdatenanforderung, die den zweiten Indikator umfasst, über die Kommunikationsschnittstelle (IF) zu versenden.

2. Programmiervorrichtung (PU) für zumindest eine Steuervorrichtung (CU) eines Kraftfahrzeugs, die eine weitere Kommunikationsschnittstelle (IF_P) aufweist, über die die Programmiervorrichtung (PU) koppelbar ist mit der jeweiligen Steuervorrichtung (CU) und die ausgebildet ist:
- eine Programmversion zumindest eines Steuerprogramms der jeweiligen Steuervorrichtung (CU), mit der sie gekoppelt ist, abzufragen,
- und wenn sie erkennt, dass das zumindest eine Steuerprogramm nicht in einer vorgegebenen Programmversion in der Steuervorrichtung (CU) abgespeichert ist, eine Programmdatenaktualisierungsaufforderung für zumindest das eine zu aktualisierenden Steuerprogramm über die weitere Kommunikationsschnittstelle (IF_P) an die jeweilige Steuervorrichtung (CU) zu senden, wobei die Programmdatenaktualisierungsaufforderung zumindest einen ersten Indikator umfasst, der mögliche Protokolle repräsentiert, die für das Programmieren mit aktualisierten Programmdaten des jeweiligen Steuerprogramms genutzt werden können,
- eine in Antwort auf die Programmdatenaktualisierungsaufforderung an der weiteren Kommunikationsschnittstelle (IF_P) bereitgestellte Programmdatenanforderung auszuwerten, wobei die Programmdatenanforderung einen zweiten Indikator umfasst, der ein von der jeweiligen Steuervorrichtung (CU) ausgewähltes Protokoll repräsentiert, und
- abhängig von dem Auswerteergebnis die Programmierung mit den aktuellen Programmdaten gemäß dem jeweils ausgewählten Protokoll mittelbar und/oder direkt bereitzüstellen.

3. Programmiersystem (10) aufweisend:
- zumindest eine Steuervorrichtung (CU) gemäß Anspruch 1
- eine Programmiervorrichtung (PU) gemäß dem Anspruch 2, die mit der jeweiligen Steuervorrichtung (CU) gekoppelt ist.

## Claims

1. A control device (CU) for a motor vehicle, which has:
- at least one computing unit (CPU), which is configured to carry out one or more control programs,
- at least one communication interface (IF) for sending and receiving data,
- at least one program memory (M_NV) for storing program data of the respective control programs, wherein the control device (CU) is configured:
- to support a predetermined quantity of protocols for programming the control device (CU) with program data, which are stored in a predetermined manner in a program memory (M_NV),
- to read in and evaluate a program data updating request for at least one control program to be updated, which is provided at the communication interface (IF), wherein the program data updating request comprises at least a first indicator, which represents possible protocols that can be used for the programming with updated program data of the respective control program,
- depending on the first indicator, in each case, to determine a second indicator representing the protocol from the quantity of protocols that is to be used to program the control device (CU) with the program data of the control program to be updated, and
- in response to the program data updating request, to send a program data request, which comprises the second indicator, via the communication interface (IF).

2. A programming device (PU) for at least one control device (CU) of a motor vehicle, which has a further communication interface (IF_P), by means of which the programming device (PU) can be coupled to the respective control device (CU) and which is configured:
- to retrieve a program version of at least one control program of the respective control device (CU), to which it is coupled,
- and when it recognises that the at least one control program is not stored in a predetermined program version in the control device (CU), to send a program data updating request for at least the one control program to be updated via the further communication interface (IF_P) to the respective control device (CU). wherein the program data updating request comprises at least a first indicator representing possible protocols that can be used for programming with updated program data of the respective control program,
- to evaluate a program data request provided in response to the program data updating request at the further communication interface (IF_P), wherein the program data request comprises a second indicator representing a protocol selected by the respective control device (CU), and
- depending on the evaluation result, to provide the programming with the current program data in accordance with the respectively selected protocol, indirectly and/or directly.

3. A programming system (10) having:
- at least one control device (CU) according to claim 1
- a programming device (PU) according to claim 2, which is coupled to the respective control device (CU).

## Revendications

1. Dispositif de commande (CU) pour un véhicule comprenant :
- au moins une unité de calcul (CPU) qui est réalisée pour pouvoir exécuter un ou plusieurs programme(s) de commande,
- au moins une interface de communication (IF) pour permettre d'émettre et de recevoir des données,
- au moins une mémoire de programmes (M_NV) pour permettre de stocker des données de programme des programmes de commande respectifs, le dispositif de commande (CU) étant réalisé pour :
- prendre en charge une quantité prédéfinie de protocoles, programmer ce dispositif de commande (CU) avec des données de programme qui ont été conservées en mémoire de façon prédéfinie dans une mémoire de programmes (M_NV),
- entrer et évaluer une demande d'actualisation des données de programme pour au moins un programme de commande devant être actualisé qui est fourni à l'interface de communication (IF), cette demande d'actualisation de données de programme renfermant au moins un premier indicateur qui représente des protocoles possibles pouvant être utilisés pour la programmation avec des données de programme actualisées du programme de commande respectif,
- déterminer respectivement en fonction du premier indicateur, un second indicateur qui représente parmi la quantité de protocoles le protocole qui doit être utilisé pour la programmation du dispositif de commande (CU) avec les données de programme du programme de commande devant être actualisé, et
- en réponse à la demande d'actualisation des données de programme, transmettre par l'intermédiaire de l'interface de communication (IF) une demande de données de programme qui renferme le second indicateur.

2. Dispositif de programmation (PU) d'au moins un dispositif de commande (CU) d'un véhicule qui comprend une autre interface de communication (IF_P) par l'intermédiaire de laquelle le dispositif de programmation (PU) peut être accouplé au dispositif de commande respectif (CU) et qui est réalisée pour :
- interroger une version de programme d'au moins un programme de commande du dispositif de commande respectif (CU) auquel elle est accouplée, et
- lorsqu'elle reconnait que le programme de commande n'est pas mis en mémoire dans une version de programme prédéfinie dans le dispositif de commande (CU), transmettre une demande d'actualisation de données de programme pour au moins le programme de commande devant être actualisé au dispositif de commande respectif (CU), par l'intermédiaire de l'autre interface de communication (IF_P) la demande d'actualisation de données de programme comprenant au moins un premier indicateur qui représente des protocoles possibles pouvant être utilisés pour la programmation avec des données de programme actualisées du programme de commande respectif,
- évaluer une demande de données de programme fournie à l'autre interface de communication (IF_P), en réponse à la demande d'actualisation de données de programme la demande de données de programme comprenant un second indicateur qui représente un protocole choisi par le dispositif de commande (CU) respectif, et
- en fonction du résultat de l'évaluation fournir indirectement et/ou directement la programmation avec les données de programme actuelles selon le protocole choisi respectif.

3. Système de programmation (10) comprenant :
- au moins un dispositif de commande (CU) conforme à la revendication 1,
- un dispositif de programmation (PU) conforme à la revendication 2 qui est couplé au dispositif de commande (CU) respectif.
